# EUROPEAN PATENT APPLICATION

(11) **EP 2 590 031 A1**
(43) Date of publication of application: **08.05.2013**
(21) Application number: 11008765.7
(22) Date of filing: 03.11.2011
(51) Int. Cl.: G03H 1/00, G01D 5/347, G01N 21/47, B60S 1/08

(54) **Hologram and device comprising a hologram**

(71) Applicant: Sony DADC Austria AG, 5081 Anif (AT)
(72) Inventor: Perlot, Stefan, 5300 Hallwang (AT); Höpoldseder, Erich, 5081 Anif (AT); Naisby, Andrew, 5026 Salzburg (AT)
(74) Representative: Müller - Hoffmann & Partner

(57) **Abstract**

A hologram comprises a holographic layer stack including a holographic layer (14), holographic structures being formed in the holographic layer, and a functional layer (17), wherein the functional layer is configured to change its optical properties when being exposed to an environmental influence, wherein the holographic layer and the functional layer are stacked. The hologram may be attached to a device (10), for example, an electric mobile device. Examples of the electric mobile device comprise a mobile phone, a personal digital assistant, an MP3 player, a camera, and a watch.

## Description

### FIELD OF THE INVENTION

The present application relates to a hologram as well as a device comprising such a hologram.

### BACKGROUND

Holograms have become widely used to determine whether or not sovereign documents such as banknotes, passports, ID cards and other personalized documents as well as credit cards are genuine of fake. Further, holograms are used to secure brand products from counterfeit. Examples for holograms comprise emboss type holograms in which an interference film is unevenly formed as is, for example, described in US 2002/0191234. Further examples comprise volume type holograms, in which the refractive index of an interference film is spatially modulated. Furthermore, holographic sensors are known in which a volume hologram interacts with an external stimulus so that the appearance thereof is changed, as is, for example, described in WO 2010/094948.

Generally, electronic equipment is made to be used within specific environmental conditions. For example, mobile phones should be used within a specific temperature range and they should not be subject to water contact which can occur in events of rain or during a machine washing program. Cardiac pacemakers should not be used in strong magnetic fields and watches should not be used for diving to specific depths of the sea. When an electronic equipment has been used under these conditions, it may fail and the user may demand repair or replacement under the guarantee of the electronic equipment. Nevertheless, the warranty conditions do not apply if the electronic equipment has been used under conditions which are not covered by the warranty. In order to proove whether a specific electronic equipment has been used under damaging conditions or not it has become practice to attach various types of sensor labels on the electronic equipment. For example, it is common practice to provide mobile electronic equipment such as mobile phones, MP3 players and others with water-contact identification labels in order to provide evidence in case the mobile electronic equipment has been brought into contact with water, as is, for example, described in US 2007/0207295, US 7,772,215, and US 7,744,997.

### SUMMARY

It is an object of the present invention to provide an improved hologram as well as a device comprising such a hologram.

According to the present invention, the above objects are solved by the claimed matter according to the independent claims.

### BRIEF DESCRIPTION OF THE DRAWINGS

The accompanying drawings are included to provide a further understanding of embodiments of the invention and are incorporated in and constitute a part of this specification. The drawings illustrate the embodiments of the present invention and together with the description serve to explain the principles. Other embodiments of the invention and many of the intended advantages will be readily appreciated, as they become better understood by reference to the following detailed description. The elements of the drawings are not necessarily to scale relative to each other. Like reference numbers designate corresponding similar parts.
Figure 1 shows a schematic cross-sectional view of a layer stack including a hologram according to an embodiment.
Figure 2 shows a schematic cross-sectional view of a layer stack including a hologram according to a further embodiment.
Figure 3 shows a device to which the hologram shown in Figure 1 or Figure 2 is adhered.
Figure 4A shows a package comprising a hologram.
Figure 4B shows a blister comprising a hologram.
Figure 5 illustrates a method of forming a hologram.

### DETAILED DESCRIPTION

In the following detailed description reference is made to the accompanying drawings, which form a part hereof and in which are illustrated by way of illustration specific embodiments in which the invention may be practiced. In this regard, directional terminology such as "top", "bottom", "front", "back", "leading", "trailing" etc. is used with reference to the orientation of the Figures being described. Since components of embodiments of the invention can be positioned in a number of different orientations, the directional terminology is used for purposes of illustration and is in no way limiting. It is to be understood that other embodiments may be utilized and structural or logical changes may be made without departing from the scope defined by the claims.

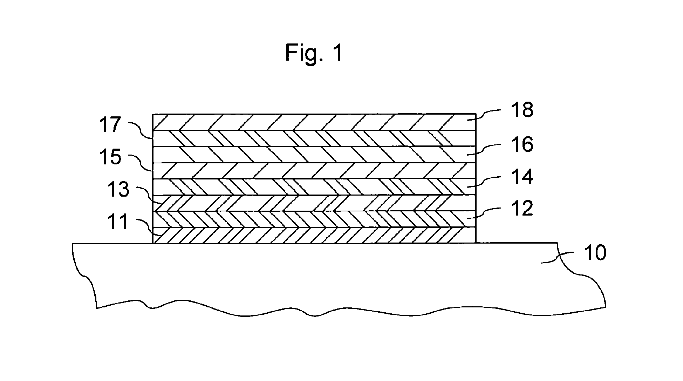

Figure 1 illustrates an example of a layer stack that may form a holographic label. The holographic label may be attached or integrated into a substrate 10. For example, the substrate 10 may be a brand product or a security document or any other item that is to be identified or labelled. The holographic label may be attached or integrated to the substrate. The label comprises an adhesive layer 11 that may be made of a suitable adhesive that is generally known or may be specifically developed. Over the adhesive layer 11, a black film 12 may be disposed. For example, this black film may be made of a common material such as rubber type adhesive film. The black film may be useful if the holographic label is to be used as a reflection hologram to increase contrast between the holographic image and the black background. As is to be clearly understood, the black film 12 may as well be omitted. A holographic layer 14 is attached to the black film 12 by means of a further adhesive layer 13. During the formation of the holographic layer an intermediate film 16 may be used made of a common material such as polyester (PET) film which is coated with the holographic material such as a photosensitive composition as described in US 5,453,340. The holographic layer 14. can be attached to the intermediate film 16 by means of a further adhesive layer 15 or may be coated on the intermediate film 16 which may omit the adhesive layer 15. A cover film 18 that may be used for protecting the hologram against environmental influences may be formed over the intermediate film 16. The layer stack further comprises a functional layer 17 that may be disposed at an arbitrary position in the layer stack. The functional layer 17 may be configured to change its optical properties when being exposed to an environmental influence. The environmental influence may, for example, be contact with water, exceeding a specific temperature range, exposure to a strong magnetic field, contact to a specific chemical, expiry of a predetermined time after application, a specific pressure or a shock exerted on the device. The exact position of the functional layer depends on its function. For example, if the functional layer changes its optical properties when being exposed to water, it may be disposed over the cover layer 18. On the other hand, if the functional layer detects a specific temperature, it may be disposed at a different position, for example within the layer stack. Details of the functional layer 17 will be described below. As is to be clearly understood, the layer stack may comprise further layers and some of the described layers may be omitted. A typical layer stack for a hologram with water contact indicator would be adhesive layer 11, followed by black film 12, followed by adhesive layer 13, holographic layer 14, intermediate film 16. cover film 18 and functional layer 17.

The holographic layer 14 may comprise a volume hologram, for example a transmission or a reflection hologram. Specific types of holograms are Lippmann holograms, Denisjuk holograms, RGB holograms, rainbow hologram, computer-generated or digital holograms. Generally, the holographic layer is a photosensitive material, in which due to irradiation with electromagnetic radiation a modulation of the refractive index takes place. Examples of photosensitive material are given in US 7,824,822, US 7,521,155, US 5,702,846, and US 5,453,340. The holographic layer may comprise a photosensitive composition such as (a) one or more free-radically polymerizable compounds, (b) one or more free-radical polymerization initiators, (c) one or more cationically polymerizable compounds other than (a), (d) one or more initiators for cationic polymerization and (e) optionally further components.

Examples of suitable free-radically polymerizable compounds (a) are acrylic-based monomers, styrene-based monomers and/or vinyl-based monomers. Specific monomers are acrylamide, methacrylamide, phenyl acrylate, 2 phenoxyethyl acrylate, mono(acryloyloxyethyl) naphthalenedicarboxylate, methylphenoxyethyl acrylate, nonylphenoxyethyl acrylate, acryloyloxyethyl hydrogenphthalate, phenoxy polyethylene glycol acrylate, 2,4,6 tribromophenyl acrylate, mono(2-methacryloyloxyethyl) diphenate, benzyl acrylate, 2,3-dibromophenyl acrylate, 2 hydroxy-3 phenoxypropyl acrylate, 2 naphthyl acrylate, N vinylcarbazole, 2 (9 carbazolyl)ethyl acrylate, triphenylmethyl triacrylate, 2-(tricyclo[5.2.1.02,6]dibromodecylthio)-ethyl acrylate, S (1 naphthylmethyl) thioacrylate, dicyclopentanyl acrylate, methylenebisacrylamide, polyethylene glycol diacrylate, trimethylpropane triacrylate, pentaerythritol acrylate, 2 acryloyloxy-ethyl 3-acryloyloxypropyl 2-hydroxydiphenate, 2 acryloyloxyethyl 3-acryloyloxypropyl 2-hydroxy-2,3-naphthalenedicarboxylate, 2-acryloyloxyethyl 3 acryloyloxypropyl 2-hydroxy-4,5-phenanthrenedi-carboxylate, dibromoneopentyl glycol diacrylate, dipentaerythritol hexaacrylate, 1,3-bis[2-acryloyloxy-3-(2,4,6-tribromophenoxy)propoxy]benzene, diethylene dithioglycol diacrylate, 2,2-bis(4-acryloyloxyethoxy-phenyl)propane, bis(4-acryloyloxydiethoxyphenyl)-methane, bis(4-acryloyloxyethoxy-3,5-dibromophenyl)-methane, 2,2-bis(4-acryoyloxyethoxyphenyl)propane, 2,2-bis(4-acryloyloxyethoxy-3,5-dibromophenyl)propane, bis(4-acryoyloxyethoxyphenyl) sulphone, bis(4-acryloyloxydiethoxyphenyl) sulphone, bis(4-acryloyloxypropoxy-phenyl) sulphone, bis(4-acryoyloxyethoxy-3,5-dibromo-phenyl) sulphone, styrene and 2-bromostyrene. It will be appreciated that it is also possible to use mixtures of a plurality of the compounds mentioned.

The initiators used for a free-radical polymerization (b) may be any desired free-radical-generating substances, for instance organic dyes with polymer salts, for example cyanines or salts of diphenyl-iodonium and diaryliodonium. Specific examples are anhydro-3,3'-dicarboxymethyl-9-ethyl-2,2'-thiacarbo-cyanine betaine, anhydro-3-carboxymethyl-3',9-diethyl-2,2'-thiacarbocyanine betaine, 3,3',9-triethyl-2,2'-thiacarbocyanine iodide, 3,9-diethyl-3'-carboxymethyl-2,2'-thiacarbocyanine iodide and 3,3',9-triethyl-2,2'-(4,5,4',5',-dibenzo)thiacarbocyanine iodide, 2-[3-(3-ethyl-2-benzothiazolidene)-1-propenyl]-6-[2-(3-(3-ethyl-2-benzothiazolidene)ethylideneimino]-3-ethyl-1,3,5-thiadiazolium iodide, 2-[[3-allyl-4-oxo-5-(3-n propyl-5,6-dimethyl-2-benzothiazolidene)ethylidene-thiazolidene]methyl]3-ethyl-4,5-diphenylthiazolinium iodide, 1,1',3,3,3',3'-hexamethyl-2,2'-indo¬tri¬carbo-cyanine iodide, 3,3'-diethyl-2,2'-thiatricarbocyanine perchlorate, anhydro-1-ethyl-4-methoxy-3'-carboxymethyl-5'-chloro-2,2'-quinothiacyanine betaine, anhydro-5,5'-diphenyl-9-ethyl-3,3'-disulphopropyloxa-carbocyanine hydroxide triethylamine salt. Specific examples of iodonium salts, for example halides, tetra-fluoro¬borates or hexafluorophosphates, are diphenyliodonium, 4,4'-dichlorodiphenyliodonium, (4-methoxyphenyl)phenyl¬iodonium, (4-octyloxyphenyl)phenyliodonium, 4,4'-dimethoxydiphenyliodonium, 4,4'-di-tert-butyldiphenyl-iodonium and 3,3'-dinitrodiphenyliodonium salts. It will be appreciated that it is also possible to use mixtures of a plurality of the compounds mentioned.

Component (c) of the photosensitive composition is one or more cationically polymerizable compounds. Examples are glycidyl-based compounds, epoxides or vinyl-based compounds. Specific monomers are diglycerol polyglycidyl ether, pentaerythritol polyglycidyl ether, 1,4-bis(2,3-epoxypropoxyperfluoroisopropyl)cyclohexane, sorbitol polyglycidyl ether, trimethylolpropane poly-glycidyl ether, resorcinol diglycidyl ether, 1,6-hexanediol diglycidyl ether, polyethylene glycol diglycidyl ether, phenyl glycidyl ether, p-t-butyl-phenyl diglycidyl ether, diglycidyl adipate, diglycidyl o-phthalate, dibromophenyl glycidyl ether, dibromo-neopentyl glycol, glycol diglycidyl ether, 1,6-di-methylolperfluorohexane glycidyl ether, 1,2,7,8-di-epoxyoctane, 4,4'-bis(2,3-epoxypropoxyperfluoro¬iso-propyl)diphenyl ether, 3,4-epoxycyclohexylmethyl 3',4'-epoxycyclohexanecarboxylate, 3,4-epoxycyclohexyloxirane, 1,2,5,6-diepoxy-4,7-methaneperhydroindene, 2-(3,4-epoxycyclohexyl)-3',4'-epoxy-1,3-dioxane-5-spiro-cyclohexane, 1,2 ethylenedioxybis(3,4-epoxycyclohexyl-methane), 4',5'-epoxy-2'-methylcyclohexylmethyl 4,5-epoxy-2-methylcyclohexanecarboxylate, ethylene glycol bis(3,4-epoxycyclohexanecarboxylate), bis(3,4-epoxy-cyclohexylmethyl) adipate, di-2,3-epoxycyclopentyl ether, vinyl 2-chloroethyl ether, vinyl n-butyl ether, triethylene glycol divinyl ether, 1,4-cyclohexane-dimethanol divinyl ether, trimethylolethane trivinyl ether or vinyl glycidyl ether. It is also possible to use combinations of the abovementioned compounds.

Component (d) of the photosensitive composition is an initiator for a cationic polymerization. Suitable compounds here are those which, after decomposition, generate Brønsted or Lewis acids, for example diaryl-iodonium salts, triarylsulphonium salts, iron-allene salts and the like. Examples of diaryliodonium salts are tetrafluoroborates, hexafluorophosphates, hexafluoroarsenates and hexafluoroantimonates of iodonium compounds. Examples of triarylsulphonium salts are tetrafluoroborates, hexafluorophosphates, hexafluoroarsenates and hexafluoroantimonates of sulphonium or triphenylsulphonium compounds, for instance 4-tert-butyltriphenylsulphonium, tris(4-methylphenyl)sulphonium, tris(4-methoxyphenyl)sulphonium, 4-thiophenyltriphenyl-sulphonium. Combinations of a plurality of the compounds mentioned are also suitable.

The photosensitive composition may optionally comprise organic solvents, for example ketones, esters, ethers, dioxanes, hydrocarbons, for instance cyclohexane, halo-hydrocarbons, aromatics, alcohols or mixtures of one or more such solvents. It is also possible to use solvent-free photopolymer compositions. Further possible additives are binders, thermal polymerization inhibitors, silane coupling agents, plasticizers, dyes and/or copolymers. Further examples comprise lithium niobate, barium titanate, and gallium arsenide. Typical layer thicknesses of holographic material are 10nm to 1mm, specifically 100nm to 100*µ*m, more specifically 1*µ*m to 50*µ*m. For example, a holographic layer may comprise a photopolymer in which upon irradiation with light, monomer particles are polymerized in the exposed portion. As the monomer particles are further polymerized, they move to the exposed portion. Thereby, the concentration of monomer particles varies by location. As a result, refractive index modulation occurs. Thereafter, when ultraviolet light or visible light is irradiated on the entire surface of the photopolymer, the monomer particles are completely polymerized. Thereby, a kind of "fixation step" takes place. Since the refractive index of the optical cured photopolymer varies with incident light, interference fringes (brightness and darkness) that occurred due to interference between reference and object illumination light can be recorded as changes of refractive index.

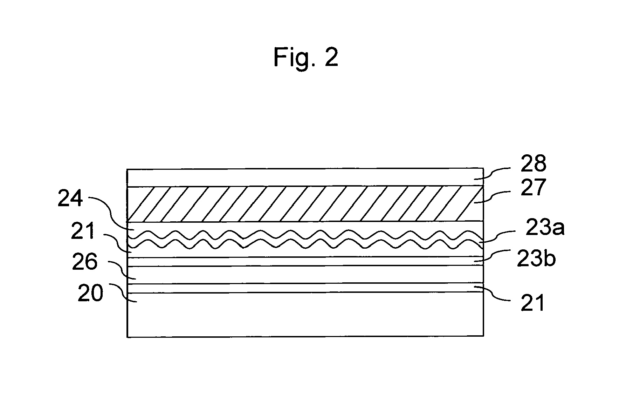

Fig. 2 shows an example of a layer stack that may form a holographic label according to a further embodiment. The holographic label may be attached or integrated into a substrate 20. The substrate 20 may be similar to the substrate 10 shown in Fig. 1. The label comprises an adhesive layer 21 that may be made of a suitable adhesive that is generally known. Over the adhesive layer 21, a colored film 26 may be disposed. A transparent film 23b may be laminated over the colored film 26. A relief hologram layer 24 comprising a transparent thin-film layer 23a which is formed over the surface of a relief interference fringe pattern 24 may be stacked over the transparent film 23b. A further adhesive layer 21 may be disposed between the transparent film 23a and the transparent film 23b. The layer stack may further comprise a functional layer 27 as has been briefly explained above and as will be in detail discussed below, as well as the cover film 28 similar to one shown in Fig. 1. Layer 24 may be made of a suitable material that is commonly used for forming a relief hologram layer. For example, various resin materials such as thermosetting resins, thermoplastic resins, and ionizing radiation curing resins may be used. For example, the relief hologram layer may be formed by coating the surface of a suitable carrier with a surface relief hologram forming material to form a hologram forming layer. Thereafter, a press stamper produced from a master hologram may be pressed against the surface of the hologram forming layer under heating to form a fine relief interference fringe pattern on the hologram forming layer surface. Then, a transparent thin-film layer 23a may be formed over the surface of the relief interference fringe pattern. The thickness of the relief hologram layer is 0.1 1*µ*m to 50 *µ*m, preferably 1 *µ*m to 20 *µ*m. Nevertheless, as is readily to be understood, the above example of a holographic layer is only by way of example. As is clearly to be understood, further examples of holographic layers may be employed as well. Moreover, combinations of the holographic layer shown in Fig. 1 and the holographic layer shown in Fig. 2 may be employed as well. Generally speaking, the holographic layer 14 and the holographic layer 24 include security features by which a user of a device can determine whether the device is genuine or a fake.

As has been explained above, the functional layer 17, 27 shown in Figs. 1 and 2 changes its appearance then being exposed to an external stimulus or to an environmental influence. Examples of the environmental influence comprise water contact, exceeding a specific temperature range, exposure to a magnetic field stronger than a predetermined magnetic field, contact to a specific chemical, expiry of predetermined time after application, exceeding a specific pressure, and a mechanical shock and further examples. To be more specific, the term "environmental influence" may denote any external influence with which the substrate 10, 20, for example, an electronic device, to which the holographic layer stack is attached, may interact.

In the context of the present specification the term "water" comprises pure water, water with arbitrary additives as well as aqueous solutions. Specific examples comprise seawater or any kind of water that is present in a common environment. For example, upon contact with water, the functional layer 17, 27 may change its appearance, for example, it may become opaque. As a further example, the layer may change its color, for example, when the temperature exceeds a specific temperature range. For example, a color change may take place at a temperature of more than 60°C or below -10°C, or when a portable hard disc has dropped onto a hard surface. Further, the functional layer 17, 27 may change its color, when being exposed to a strong magnetic field or when specific time from application to the substrate has been exceeded. Further, the layer may change its appearance after a contact with specific chemicals, for example when chemicals such as acid, alkylene, solvents are dispersed in air. Further, the functional layer may also change its appearance when a crash has taken place, for example, when the device has fallen to earth. Additionally, the functional layer may change its appearance, when a specific mechanical force has been applied, for example, when a watch has been used for diving to a specific depth of the sea.

The specific position of the functional layer 17, 27 depends on the function thereof. The functional layer 17, 27 may be disposed between the holographic layer 14, 24 and the substrate 10, 20 or may be disposed over the holographic layer 14, 24. For example, the functional layer may be a water contact indicator. In this case the functional layer 17, 27 may be disposed over the cover layer 18. Alternatively, the cover layer 18 may be replaced by the functional layer 17, 27. For example, the functional layer may comprise a combination of BaSO₄, TiO₂, cellulose and an indicator dye. Upon contact with water, the indicator dye will change its color so that it can be demonstrated that the holographic layer has been exposed to water. As a further example, the functional layer 17, 27 may comprise a water contact indicator including a coated or printed layer comprising a water soluble polymer which is encapsulated in a highly cross-linked matrix. Upon exposure to water the water soluble polymers swells or expands, however its complete dissolution is hindered by the encapsulating cross-linked matrix. Due to the binary phase aspect of the water impregnated layer an opacity results. The opacity is sufficient to block light when a selective visual or scanning reading of the hologram is performed. Furthermore, if the functional layer 17, 27 is printed, the image of the print can only be visually detected after exposure to water. Such a type of sensor is reliable and functions as a single layer that can easily be integrated into a holographic layer stack. The degree of swelling of the polymer and degree of cross-linking of the encapsulation can be tuned so that the opacity is specific to certain illumination wavelength. For example, blue and green light having a longer wavelength can be selectively blocked, whereas shorter wavelengths light such as red light can remain unaffected. This aspect may be useful in color change detection in full-color holograms.

Furthermore, the functional layer 17, 27 may detect temperature changes or changes in pH when using layers including a material that may be subject to an azo-coupling reaction. For example, the following materials may be employed, and the following reaction may take place upon a temperature change or a change in pH:

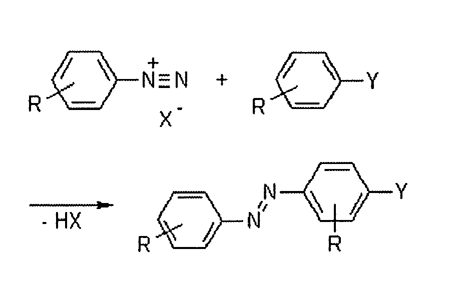

Further examples of the functional layer may comprise coupling reagents with specific color change chemistry and dependency on temperature, pH and light exposure. The nature of the polymer and/or formulation uses support the azo-dye coupling reagents can also influence the final color change and, more importantly, the rate of the color change. In this way, a graduated change can be detected directly corresponding to the extent of exposure to the stimuli. For example, polymers or additives that serve as acid generators or scavengers are particularly useful to regulate color changes.

As a further example, the functional layer 17, 27 may detect a strong magnetic field. In this case, for example, the functional layer may comprise a metal-based pigment or a pigment with a sufficient electric conductivity such as carbon black. The functional layer 17, 27 further comprises a gel-like coated or printed layer which serves as a carrier. The pigments are mobile within the carrier layer. Accordingly, a strong magnetic field serves to elevate the pigment to the uppermost surface of the sensor layer, whereby a reading or detection is enabled. In other words, when being exposed to a strong magnetic field, the functional layer 17, 27 having this construction will change its optical properties.

As a further example, the functional layer 17, 27 may be configured to detect exposure to heat. In this case, for example, the functional layer 17 may be implemented as a black film, for example, as a shrinking foil comprising voids. For example, the functional layer 17 may replace the black film 12 shown in Fig. 1. Nevertheless, the functional film may as well be disposed in any layer over the black film 12. Upon delivery, the functional film 17 is disposed in the holographic layer stack so that the voids will no longer be visible. Upon exposure to heat the shrinking foil will shrink so that the voids will become visible. This functional layer 17, 27 may be disposed at an arbitrary position within the layer stack shown, for example, in Fig. 1 and Fig. 2. As is to be clearly understood, this kind of a functional layer 17 which functions as a temperature sensor may also be employed without the holographic layer 14.

Further embodiments and modifications of the described hologram are easily conceiveable to the person skilled in the art.

According to a further embodiment, the functional layer 17, 27 may be attached to the holographic layer stack in such a manner that any kind of manipulation or replacement of this function layer will destroy the hologram. For example, the functional layer 17, 27 may be attached to the holographic layer 14, 24 by a strong adhesive so that it can not be removed from the holographic layer without damaging it. As a consequence, a manipulation of the functional layer such as replacing a colored functional layer by an uncolored one, is prevented.

According to a further embodiment, the functional layer 17, 27 may comprise more than one sub-layers. For example, the functional layer 17, 27 may comprise two sub-layers that react with each other when being exposed to the environmental influence to change the optical appearance thereof.

As is clearly to be understood, the holographic layer stack may as well comprise more than one functional layer. For example, the holographic layer stack may comprise a plurality of functional layers each reacting upon a different external stimulus. The hologram comprising the functional layer adds a further functionality to the security and/or functional label, and can be easily integrated into the layer stack. Hence, this hologram can save significant cost in manufacturing because one integrated label delivers security and functionality.

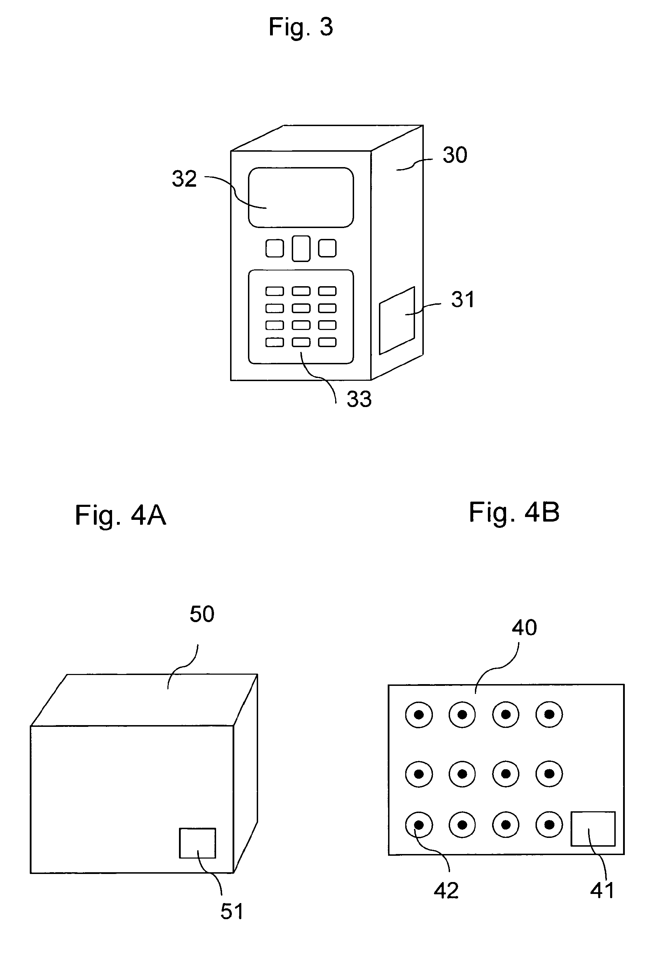

Fig. 3 shows a mobile phone 30 as an example of a device comprising a hologram 31 as described above. For example, the device may comprise a computer, portable electronic equipment such as a mobile phone, a personal digital assistant, an MP3 player, a watch, a camera, a notebook and others. The mobile phone 30 may further comprise the usual components such as a display 32 and a keypad 33. The mobile phone is only given by way of example. It is clearly to be understood, that the device may be embodied by various other electronic equipment as has been mentioned above. The hologram may be attached or adhered to the device. For example, the hologram 31 may be adhered to the device 30 so that it cannot be removed without destroying the hologram 31.

Fig. 4A shows a package 50 comprising a hologram 51 as described above. For example, the package 50 may be a package of an electronic device or equipment. A package 50 comprising the hologram 51 may be useful for the consumer or the merchant in order to proove that a specific product has already been subject to the detrimental environmental conditions before he or she bought it. Alternatively, the package 50 may be a package of a brand product such as an arbitrary consumer product as exemplified by coffee, chocolate, cigarettes and others. Fig. 4B shows a blister 40 for packaging pills or tablets 42, the blister 40 comprising the holgram 41 as described above. In this case the hologram 41 may be useful to proove that the pills or tablets 42 have been subject to detrimental environmental conditions in case the pills or tablets do not show the desired effects.

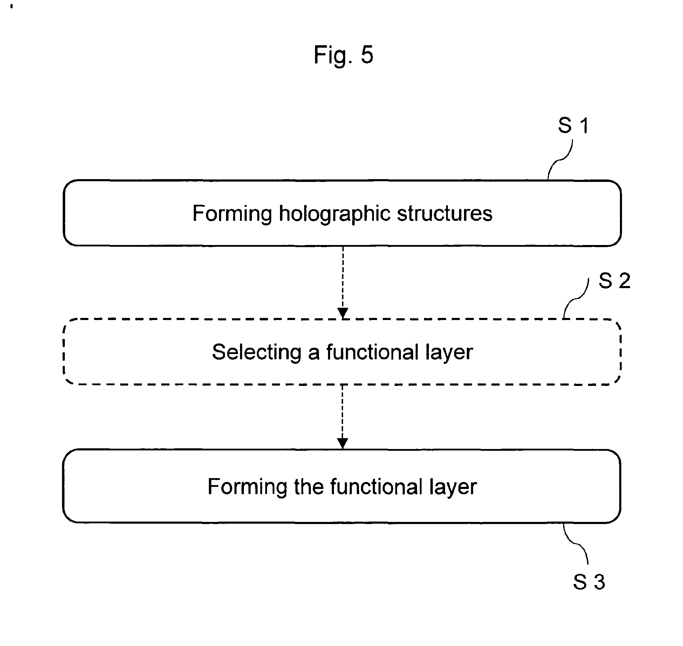

Figure 5 illustrates a method of forming a hologram. The method may comprise forming holographic structures in a layer to form a holographic layer (S1), and forming a functional layer (S3), wherein the functional layer is configured to change its optical properties when being exposed to an environmental influence, wherein the holographic layer and the functional layer are stacked. According to an embodiment, the hologram is configured to be attached to a device. According to this embodiment, the method may further comprise selecting the functional layer in accordance with a resistance of the device with respect to the environmental influence (S2). For example, typical hard discs state an equivalent gravitational shock rating to which they are tolerant. In this case, a functional layer that specifically changes its appearance when this tolerance is exceeded, may be selected. In this case the functional layer is specific to the intended product or device to which the hologram is going to be attached. Generally stated, according to this embodiment, the functional layer is selected in dependence from the sensitivity of the device to a specific environmental influence.

While embodiments of the invention have been described above, it is obvious that further embodiments may be implemented. For example, further embodiments may comprise any subcombination of features recited in the claims or any subcombination of elements described in the examples given above. Accordingly, this spirit and scope of the appended claims should not be limited to the description of the embodiments contained herein.

## Claims

1. A hologram comprising a holographic layer stack including:
a holographic layer, holographic structures being formed in the holographic layer, and
a functional layer, wherein the functional layer is configured to change its optical properties when being exposed to an environmental influence,
wherein the holographic layer and the functional layer are stacked.

2. The hologram according to claim 1,
wherein the environmental influence is selected from the group consisting of:
- exceeding a specific temperature range;
- exposure to a magnetic field stronger than a predetermined magnetic field;
- expiry of predetermined time after application;
- exceeding a specific pressure; and
- a mechanical shock.

3. The hologram according to claim 1 or 2,
wherein the holographic layer comprises an embossed type hologram.

4. The hologram according to any of the preceding claims, wherein the holographic layer comprises a volume type hologram.

5. The hologram according to any of the preceding claims, wherein the holographic layer stack is attached on the surface of a substrate, and the functional layer is disposed on a side of the holographic layer that is remote from the substrate.

6. The hologram according to any of claims 1 to 4, wherein the holographic layer stack is attached on the surface of a substrate, and the functional layer is disposed between the holographic layer and the substrate.

7. The hologram according to any of the preceding claims, wherein the functional layer is configured to change its color when being exposed to the environmental influence,

8. The hologram according to any of the preceding claims, wherein the functional layer is configured to change its transparency when being exposed to the environmental influence,

9. The hologram according to claim 8, wherein the functional layer is configured to change its transparency with respect to at least one specific wavelength of illumination light when being exposed to the environmental influence.

10. The hologram according to any of the preceding claims,
wherein the environmental influence is selected from the group consisting of:
- water contact; and
- contact to a specific chemical.

11. A device comprising the hologram according to any of claims 1 to 10.

12. The device according to claim 11, the device being an electric mobile device.

13. A package comprising the hologram according to any of claims 1 to 10.

14. A method of forming a hologram comprising a holographic layer stack the method comprising:
forming holographic structures in a layer to form a holographic layer, and
forming a functional layer, wherein the functional layer is configured to change its optical properties when being exposed to an environmental influence,
wherein the holographic layer and the functional layer are stacked.

15. The method of claim 14, wherein the hologram is configured to be attached to a device, further comprising selecting the functional layer in accordance with a resistance of the device with respect to the environmental influence.
